# EUROPÄISCHE PATENTSCHRIFT

(11) **EP 3 531 958 B1**
(45) Veröffentlichungstag und Bekanntmachung des Hinweises auf die Patenterteilung: **09.09.2020**
(21) Anmeldenummer: 17790726.8
(22) Anmeldetag: 16.10.2017
(51) Int. Cl.: A61C 11/00

(54) **VIRTUELLER ARTIKULAOTR**
VIRTUAL ARTICULATOR
ARTICULATEUR VIRTUEL

(30) Priorität: 31.10.2016 DE 102016120762
(43) Veröffentlichungstag der Anmeldung: 04.09.2019
(73) Patentinhaber: SICAT GmbH & Co. KG, 53175 Bonn (DE)
(72) Erfinder: HANSSEN, Nils, 53125 Bonn (DE); FREYER, Dirk, 50937 Köln (DE); ZÜNDORF, Gerhard, 53177 Bonn (DE)
(74) Vertreter: Braun-Dullaeus Pannen Emmerling Patent- & Rechtsanwaltspartnerschaft mbB
(86) Internationale Anmeldenummer: PCT/EP2017/076357
(87) Internationale Veröffentlichungsnummer: WO 2018/077653

(56) Entgegenhaltungen:
- DE-A1-102004 006 561
- DE-A1-102012 104 373
- US-A1- 2010 145 898

## Beschreibung

Die vorliegende Erfindung betrifft ein Verfahren und eine Vorrichtung zur Erstellung eines rechnergestützten virtuellen Artikulators für die Zahnheilkunde zur Simulation von Kaubewegungen des menschlichen Kauapparats, umfassend körperbezogene Daten, die von einer Mehrzahl von Menschen aufgezeichnet und zu einem Datenkollektiv zusammengefasst werden. Aus dem Datenkollektiv wird mittels statistischer Methoden in einer Computerumgebung ein Modell des Kauapparates generiert.

Eine solche Vorgehensweise ist aus der WO 2016/079 071 A1 bekannt. DE 10 2012 104 373 A1 offenbart die Ermittlung einer Folge von Transformationsmatrizen bei Kenntnis mehrerer Positionen des Unterkiefers relativ zum Oberkiefer, wobei bei zeitlich hoher Auflösung und entsprechender Abfolge von Transformationsmatrizen die Bewegung des Unterkiefers relativ zum Oberkiefer simuliert werden kann.

Leidet ein Patient unter Beschwerden des Kauapparates konsultiert er häufig einen Zahnarzt, damit dieser eine Diagnose stellen kann. Auf die Diagnose folgen typischerweise eine Therapieempfehlung und unter Umständen auch eine Auftragsarbeit an ein Zahntechniklabor, um einen Zahnersatz für den Patienten anzufertigen. Um den Zahnersatz korrekt anfertigen zu können, verwendet der Zahntechniker zweckmäßigerweise einen sogenannten Artikulator, welcher eine dreidimensionale Kaubewegung des Patienten vermittels mechanischer Gelenke nachahmt. Je präziser diese simulierte Kaubewegung der realen Kaubewegung des Patienten entspricht, desto genauer und besser kann der Zahnersatz angefertigt werden. Eine hohe Genauigkeit ist hierbei besonders wichtig, da sich schon Ungenauigkeiten im Mikrometerbereich nachteilig auf das Kaufempfinden des Patienten auswirken können. Man denke nur daran, wie störend eine in dieser Größenordnung angesiedelt Apfelfaser im Mundraum/Zahnzwischenraum sein kann.

Die heute noch standardmäßig verwendeten mechanischen Artikulatoren versuchen die Kaubewegung eines Menschen mittels mehrerer beweglicher Gelenke dreidimensional zu simulieren. Dies gelingt in der Regel allerdings nur sehr unzureichend, da die Bandbreite menschlicher Kaubewegungen für solch mechanische Lösungsansätze zu komplex ist. Häufig wird in der Zahnheilkunde eine Therapie geplant bzw. ein Zahnersatz für einen Patienten mit einem idealisierten, bereits vorhandenen mechanischen Standard-Artikulator angefertigt, was oft zu schlecht sitzendem Zahnersatz führt, da jeder Patient eine individuelle Anatomie aufweist.

Die individuellen Kiefer- und Kaubewegungen des Patienten können durch verschiedene Verfahren aufgenommen werden. So kann beispielsweise mittels der Axiographie die Kaubewegung des Patienten ermittelt und mittels eines Computers aufgezeichnet werden. Aufgrund der Resilienz der Haut sind diese Aufzeichnungen oft nicht reproduzierbar, sodass jede Messung andere Ergebnisse liefert. Wobei andererseits seit langen aus der Physik bekannt ist, dass experimentelle Messungen in der Praxis eigentlich immer gaußverteilte statistische Unsicherheitsverteilungen aufweisen. Nachteilig ist in der Praxis bisher kein Verfahren zur Erstellung eines Artikulators bekannt bei dem verschiedene Bewegungsverläufe des Kauapparates statistisch ausgewertet werden, sodass beispielsweise ein Mittelwert gebildet wird, welcher zur Erstellung des Artikulators verwendet wird.

Um von dem Patienten einen Bewegungsdatensatz aufzunehmen, wird typischerweise zunächst eine digitale Volumentomographie (DVT) des Patienten angefertigt, um die Strukturen des Kauapparates des Patienten zu identifizieren. Dieser Datensatz wird dann mit Daten des sogenannten 4D-Jaw-Motion-Tracking Verfahrens (JMT) kombiniert, welches zur Messung der Kaubewegung verwendet wird. Aus der Kombination beider Datensätze kann ein zeitaufgelöster Datensatz des Kauapparates des Patienten generiert werden. Bei einem unvollständig vorliegenden zeitaufgelösten Bewegungsdatensatz (wenn beispielsweise manche Bewegungsphasen komplett fehlen), ist aus dem Stand der Technik nachteilig kein Verfahren bekannt, durch welches auf die nicht aufgezeichneten "Zwischenbewegungen" geschlossen werden kann, welche für die präzise Erstellung eines Zahnersatzes wichtig sind.

Selbst wenn die Grenzbewegungen präzise und vollständig aufgezeichnet sind, können diese nicht präzise auf einen mechanischen Artikulator übertragen werden, da dessen Mechanik nur ganz bestimmte Einstellmöglichkeiten zulässt, wobei diese Einschränkungen auch für herkömmliche virtuelle Artikulatoren gelten, da diese den mechanischen Artikulatoren nachempfunden sind. Typischerweise werden komplexe dreidimensionale Kaubewegungen auf einzelne skalare Werte, beispielsweise den Bennett-Winkel, reduziert, sodass es nachteilig vorkommen kann, dass unterschiedliche Kaubewegungen durch denselben Bennett-Winkel repräsentiert werden. Offensichtlich findet hierbei ein Informationsverlust statt.

Selbst wenn ein in der Praxis verwendeter Artikulator zufällig in der Lage wäre eine aufgezeichnete Kaubewegung eines bestimmten Patienten zu simulieren, so ist dieser Artikulator nachteilig nicht in der Lage präzise Vorhersagen über Bewegungen des Kauapparates dieses Patienten zu treffen, die über die aufgezeichneten Kaubewegungen hinausgehen. Dies betrifft vor allem die komplexen Schwenk-Gleitbewegungen.

Es ist daher die Aufgabe der vorliegenden Erfindung ein Verfahren und eine Vorrichtung zur Erstellung eines virtuellen Artikulators bereitzustellen, sodass die Kaubewegungen eines Patienten möglichst vollständig, präzise und individuell mit dem virtuellen Artikulator dargestellt werden.

Diese Aufgabe wird erfindungsgemäß durch ein Verfahren mit den Merkmalen des Anspruchs 1 und eine Vorrichtung mit den Merkmalen des Anspruchs 20 gelöst. Vorteilhafte Ausführungsformen der Erfindung sind in den Unteransprüchen genannt.

Der bei dem erfindungsgemäßen Verfahren realisierte Kerngedanke liegt darin, dass das aus dem Datenkollektiv generierte Modell verwendet wird, um die von einem Patienten aufgezeichneten körperbezogenen Daten zu einem individuellen Bewegungsmodell des Kauapparates des Patienten zu ergänzen und den Kauapparat mit dem Artikulator zu simulieren. Durch die statistische Auswertung der körperbezogenen Daten der Mehrzahl von Menschen in einem Datenkollektiv kann auf funktionale Zusammenhänge des menschlichen Kauapparates geschlossen werden. Die Daten von verschiedenen Menschen ergänzen sich in dem Datenkollektiv in einer Art, dass ein vollständiger 4D-Bewegungsablauf des Kauapparates generiert wird. Typischerweise werden für einen bestimmten Patienten volumetrische tomographischen Daten lediglich für eine kleine Anzahl von Bewegungsphasen aufgenommen und erfasst. Sind von anderen Patienten hiervon verschiedene Bewegungsphasen erfasst, können beide zu einem vollständigen Satz von Bewegungsphasen ergänzt werden. Gleiche Phasen werden benutzt, um statistische Zusammenhänge zu ermitteln und die wahrscheinlichste Kaubewegung unter einer Vielzahl von Menschen zu ermitteln. Die Anwendung von statistischen Methoden liefert Antworten bei Fragestellungen wie etwa: Was ist die wahrscheinlichste Kaubewegung des Datenkollektivs und wie wahrscheinlich ist es, dass die Aufnahme eines bestimmten Patienten in das Gesamtbild des Datenkollektivs passt? Zeigt der Patient aufgrund der von ihm vorhandenen Daten eine große körperbezogene Übereinstimmung mit zumindest einer Teilmenge des Datenkollektivs, so erhöht dies die Wahrscheinlichkeit, dass die Simulation der Kaubewegung dieses Patienten mit zumindest dieser Teilmenge Datenkollektiv übereinstimmt und für die Verwendung des virtuellen Artikulator herangezogen werden kann, sodass der Zahntechniker einen Zahnersatz präzise und korrekt anfertigen kann.

Die körperbezogenen Daten weisen bevorzugt zusätzlich Informationen auf, die angeben mit welcher Wahrscheinlichkeit ein bestimmter Befund bzw. eine Krankheit vorliegt, sodass diese Informationen bei der Modellbildung berücksichtigt werden. Zusätzlich werden optional spielsymmetrische Eigenschaften sowohl bei den Eingangsdaten als auch bei den Ausgangsdaten des Modells berücksichtigt. Liegen beispielsweise Daten aus dem linken Bereich des Kauapparates vor, kann mittels spiegelsymmetrischer Annahmen auf den rechten Bereich geschlossen werden bzw. diese Informationen bei der Modellbildung berücksichtigt werden.

Vorteilhaft werden die körperbezogenen Daten des Patienten über eine Schnittstelle übertragen und zum Datenkollektiv hinzugefügt. Die Schnittstelle ermöglicht hierbei, dass die Daten in verschiedenen medizinischen Zahnkliniken/Zentren und/oder Praxen erhoben werden und vorteilhaft zu einem einzigen Datenkollektiv kombiniert werden. Auf diese Art und Weise kann die Menge des Datenkollektivs erhöht werden. Dies ist für statistische Auswertungen wichtig, da hierbei zumeist eine Mindestanzahl von körperbezogenen Daten von Menschen bereitgestellt werden muss, um statistische Aussagen treffen zu können. Die evidenzbasierte Medizin gibt Verfahren an bei denen eine Mindestanzahl von Daten erhoben werden muss, um signifikante Aussagen treffen zu können.

Bevorzugt umfassen die körperbezogenen Daten Daten aus bildgebenden Verfahren und/oder Daten aus der Anamnese und/oder Bewegungsdaten. Die Anamnese-Daten umfassen Informationen über das Geschlecht und/oder die Größe und/oder das Alter und/oder die Herkunft und/oder den BMI und oder Vorerkrankungen und/oder Befunde und/oder anderer behandlungsrelevante Kennzeichen des Patienten. In der Medizin werden diese behandlungsrelevanten Kennzeichen eines Patienten Subgruppen genannt. Diese Subgruppen sollen bevorzugt auch bei der Mehrzahl von Menschen, deren Daten das Datenkollektiv ausbilden, möglichst vollständig erhoben werden. Diese Subgruppen werden in der Medizin und in der klinischen Forschung verwendet, um Patienten voneinander unterscheiden zu können und um ähnliche Patienten zu identifizieren. Hierbei haben sich die vorstehend genannten Subgruppen als zweckmäßig und zugleich als klinisch relevant herausgestellt. Die Auflistung der Subgruppen ist aber nicht abschließende Aufzählung zu verstehen, sodass das Hinzufügen weiterer Subgruppen den Rahmen der Erfindung nicht verlässt. Die Bewegungsdaten geben die Bewegung des Kauapparates wieder und werden beispielsweise mittels eines Jaw-Motion-Tracking Systems (JMT) aufgezeichnet.

Bevorzugt werden aus den Anamnese-Daten verschiedene Patientenpopulationen mit ähnlichen Eigenschaften für das Modell gebildet, wobei der Patient zumindest eine dieser Patientenpopulationen zugeordnet wird und für jede dieser Patientenpopulationen ein ihr zugeordneter, spezifischer Artikulator generiert wird. Ein Kleinkind und ein Erwachsener unterscheiden sich offensichtlich zumindest bezüglich der Kategorien des Alters und der Größe. Dies hat zur Folge, dass die Kauapparate und die Kaubewegung eines Kleinkindes und eines Erwachsenen verschieden ausgebildet sind. Durch die Zuordnung des Patienten in eine Patientenpopulation, die ihm am besten entspricht, wird sichergestellt dass das richtige Modell für den Patienten ausgewählt wird, wobei vorteilhaft für jede Patientenpopulation ein eigenes Modell des Kauapparates generiert wird. Gegebenenfalls können weitere Kategorien zur Unterscheidung von Patienten hinzugefügt werden und sogar mehrere Modelle für jede Patientenpopulation erzeugt werden, wobei mittels statistischer Methoden angegeben wird, welches diese Modelle am ehesten dem Patienten entspricht. Bevorzugt werden diesbezüglich Signifikanzwerte aus statistischen Tests wie etwa dem Ancova, t-Test oder Chi-Square Test angegeben. Es ist zudem möglich, die gewünschte statistische Signifikanz vorzugeben und die entsprechende Patientenpopulation so zu erweitern, bis das Datenkollektiv groß genug ist, um Aussagen bezüglich der vorgegebenen Signifikanz zu treffen.

Vorzugsweise umfassen die bildgebenden Verfahren eine digitale volumetrisch tomographische Datenaufnahme (DTV) und/oder eine Datenaufnahme mittels eines Jaw-Motion-Tracking Systems (JMT) und/oder andere geeignete Messverfahren zur Beschreibung der Anatomie des Kauapparates. Durch die Verwendung von Röntgenstrahlen in den bildgebenden Verfahren wird die Elektronendichte der Strukturen des Kauapparates bestimmt, woraus Informationen über beispielsweise die Knochen- und/oder Zahnstruktur und/oder Entzündungen des Kauapparates/Zahnfleisches gewonnen werden können. Prinzipiell kann für diese bildgebenden Verfahren anstatt Röntgenstrahlen auch die Protonenradiographie oder die Magnetresonanztomographie verwendet werden. Entscheidend ist hierbei gleichzeitig eine effiziente Bildaufnahme zu gewährleisten, die eine Vielzahl an Informationen bereitstellt und den Patienten strahlentechnisch möglichst wenig belastet.

Vorteilhaft werden die bildgebenden Daten von verschiedenen Messverfahren in ein gemeinsames Bezugssystem eingebracht. Ein gemeinsames Referenz-Bezugssystem ist wichtig, um bildgebende Daten, die beispielsweise in verschiedenen Kliniken aufgezeichnet wurden zu einem gemeinsamen Datenkollektiv zusammenzufassen, sodass diese zusammen ausgewertet werden können und sich Gesetzmäßigkeiten aus ihnen ergeben können. Beispielsweise kann in einer ersten Klinik vorgesehen sein, dass der Patient von seiner linken Gesichtshälfte aus durchleuchtet wird, wohingegen eine zweite Klinik eine Durchleuchtung von der rechten Gesichtshälfte aus vorsieht. Um eine spätere Auswertung zur Erstellung des virtuellen Artikulator vornehmen zu können, müssen die Daten demnach in das gemeinsame Referenz-Bezugssystem eingebracht werden, damit die linke Gesichtshälfte von der rechten Gesichtshälfte nicht verwechselt werden.

Bevorzugt umfassen die körperbezogenen Daten Oberflächendaten der Zähne und/oder Beißkräfte des Kauapparates. Sind die Oberflächendaten der Zähne bekannt, ermöglicht dies den Zahntechniker den Zahnersatz auf Anhieb präzise zu fertigen, sodass aufwändige Nacharbeiten zur Korrektur wegfallen. Die Erfassung der Beißkräfte ist eine wichtige Information für den Zahnarzt, um die Dynamik des Kauapparates des Patienten zu erfassen und beurteilen zu können.

Bevorzugt wird die Beißkraft aufgrund des zeitlichen Verlaufs der Okklusion der Zähne bestimmt, welcher durch die bildgebenden Verfahren aufgenommen wird. Dies hat den Vorteil, dass der Patient keine zusätzlichen Messungen zur Bestimmung seiner Beißkraft zu unterlaufen hat. Aus zuvor aufgenommenen Beißkräften können Gesetzmäßigkeiten abgeleitet werden, in welcher Weise der zeitliche Verlauf der Okklusion mit den auftretenden Kräften korreliert.

In einer bevorzugten Ausgestaltung des Verfahrens umfassen die durch die bildgebenden Verfahren aufgezeichneten Daten Aufnahmen mehrerer Bewegungsphasen des Kauapparates und/oder Aufnahmen zu verschiedenen Zeitpunkten. Je mehr Bewegungsphasen bzw. je mehr verschiedene Zeitpunkte durch die bildgebenden Verfahren erfasst werden, desto besser zeitlich aufgelöst kann die Bewegung des Kauapparates wiedergegeben werden und statistische Unsicherheiten reduziert werden. Zusätzlich werden die jeweiligen Bewegungsphasen mit weiteren therapierelevanten Informationen gekennzeichnet. Diese therapierelevanten Informationen umfassen die Beschreibung von pathologischen Befunden oder anderer Auffälligkeiten.

Bevorzugt wird das durch den virtuellen Artikulator simulierte, individuelle Bewegungsmodell des Patienten auf einer Anzeigevorrichtung dargestellt und/oder weitere Ausgabeinformationen und/oder eine Therapievorschausimulation bereitgestellt. Eine zweckmäßige Anzeigevorrichtung ist hierbei beispielsweise ein Computerbildschirm oder ein Bildschirm eines mobilen Endgeräts wie beispielsweise eines Smartphones oder eines Tablets. Weitere Ausgabeinformationen sind hilfreich um dem Zahnarzt oder dem Patienten die Beurteilung des durch den virtuellen Artikulator simulierten Bewegungsmodells zu erleichtern und zu präzisieren. Eine Therapievorschausimulation zeigt hierbei vorteilhaft, wie sich ein geplanter Eingriff auf die Kaubewegung des Patienten auswirkt. Hierbei können durch den Zahnarzt oder den Zahntechniker zweckmäßig mehrere Szenarien simuliert und deren Auswirkungen begutachtet werden. Beispielsweise kann sich für den Zahnarzt die Frage stellen, ob er eine Therapie einleiten soll oder den Kauapparat eines Patienten lieber im unbehandelten Zustand belässt, da eine Therapie auch zu einer Verschlechterung der Gesamtsituation für den Patienten führen kann. Die Therapievorschau hilft, bevorzugt durch die Angabe von Signifikanzwerten, dies einzuschätzen und zu beurteilen.

In einer bevorzugten Ausgestaltung der Erfindung gibt der virtuelle Artikulator auf der Anzeigevorrichtung an, ob die von den Patienten aufgezeichneten körperbezogenen Daten zur Erstellung des simulierten Bewegungsmodells hinreichend sind und welche Messungen gegebenenfalls noch auszuführen sind. Hierzu gibt der Arzt bevorzugt eine bestimmte patientenindividuelle Präzision der Messung vor. Wird bei einem ersten Patienten eine weniger hohe Präzision als bei einem zweiten Patient benötigt, so werden dem ersten Patienten hierdurch unnötige Messungen erspart. Wird auf der Anzeigevorrichtung angezeigt, dass das Alter des Patienten noch zu ergänzen ist, damit der Patient dem entsprechenden Datenkollektiv zugeordnet werden kann, wird diese Information beim Patienten nachgefragt und hinzugefügt. Die Anzeigevorrichtung kann hierbei aber auch angeben, ob beispielsweise ein bildgebender oder Bewegungsdatensatz von einer unzureichenden Qualität ist, oder ob noch weitere bildgebende oder Bewegungsdatensätze erstellt werden müssen, um ein präzises simuliertes Bewegungsmodell des Patienten zu erzeugen. Der Artikulator gibt interaktiv Befehle aus, die die Messung erleichtern bzw. erst möglich machen. Ein Beispiel für einen solchen Befehl durch den Artikulator wäre: "In der nächsten Bewegungsaufnahme bitte den Unterkiefer öffnen und gleichzeitig nach links schieben."

Vermittels des Artikulators wird die Bewegung ausgewählter markanter Punkte des Kauapparates auf der Anzeigevorrichtung dargestellt. Die markanten Punkte sind hierbei bevorzugt solche, die in der Zahlheilkunde eine herausragende Bedeutung aufweisen, sodass diese bevorzugt betrachtet und studiert werden. So kann der räumliche Verlauf markanter Punkte wie beispielsweise einzelner Zahnhöcker untersucht und quantifiziert werden. Auch die Bewegung des Gelenkköpfchens des Kiefergelenkes und markante Punkte dessen können hinsichtlich ihrer Bewegung untersucht und quantifiziert werden.

Bei der Darstellung des Bewegungsmodells auf der Anzeigevorrichtung werden zweckmäßig anatomische Punkte des Kauapparates bezüglich einer Translation- und/oder einer Rotationsbewegung fixiert, wobei der virtuelle Artikulator automatisch die hieraus resultierenden Freiheitsgrade des Modells berechnet und angibt. Dies kommt einer geführten Mundöffnung am echten Patienten gleich. Hierdurch wird ermöglicht, dass das Modell des Kauapparates beispielsweise um einen Punkt oder um eine Achse drehbar bzw. rotierbar ist und unter verschiedenen Ansichtswinkeln betrachtet werden kann.

Bevorzugt wird durch die weiteren Ausgabeinformationen angegeben mit welcher Wahrscheinlichkeit der Patient einer bestimmten Patientenpopulation zuzuordnen ist und/oder mit welcher Wahrscheinlichkeit eine bestimmte Krankheit bzw. ein bestimmter Befund des Patienten vorliegt. Ist beispielsweise die Wahrscheinlichkeitsangabe für zwei mögliche Krankheiten in etwa gleich hoch und ein bestimmtes Signifikanzlevel (z.B. Alpha = 0,05) nicht erreicht, kann der Arzt weitere diagnostische Maßnahmen unternehmen, um anhand einer verbesserten Datenlage beurteilen zu können.

In einer vorteilhaften Ausgestaltung der Erfindung wird das simulierte Bewegungsmodell des Kauapparates des Patienten als digitaler volumetrisch tomographischer Datensatz mit Oberflächendaten von zumindest einem Teil der Zähne des Patienten ausgegeben. Dieser Datensatz kann über die Schnittstellen in weitere Rechnersysteme eingepflegt und auch zwischen verschiedenen Forschern bzw. Zahnärzten an verschiedenen Kliniken ausgetauscht werden. Zudem ist es wichtig einen einheitlichen, informationsreichen Ausgabestandard vorzusehen, sodass die Kompatibilität von virtuellen Artikulatoren untereinander erhöht. Der digitale volumetrisch tomographische Datensatz in möglichst vielen Bewegungsphasen weist hierbei die relevanten Informationen für Fragestellungen der Zahnheilkunde auf.

Bevorzugt werden Methoden der Finiten Elemente für das Modell verwendet, welche sich als eine Methode zur numerischen Approximation bewährt haben.

Der virtuelle Artikulator wird externen Benutzern vorteilhaft über ein Interface zur Verfügung gestellt, wobei das Datenkollektiv zugleich unter Verschluss gehalten wird und für externe Benutzer unzugänglich bleibt. Hierdurch wird sichergestellt, dass die Daten von Patienten geschützt werden aber gleichzeitig das Datenkollektiv für eine Auswertung Dritter zur Verfügung steht.

Gemäß einem weiteren Aspekt der Erfindung ist eine Vorrichtung nach dem vorstehend beschriebenen Verfahren angegeben, die ein Gerät zur Aufnahme eines bildgebenden Datensatzes des Kauapparates von Patienten, einen Rechner mit einer Prozessoreinheit zur Erstellung des virtuellen Artikulators und eine Schnittstelle für die Eingabe des bildgebenden Datensatzes in den Rechner und eine Anzeigevorrichtung zur Darstellung des virtuellen Artikulator umfasst.

Weitere Vorteile, Eigenschaften und Weiterbildungen der Erfindung ergeben sich aus den abhängigen Ansprüchen sowie aus der nachstehenden Beschreibung von bevorzugten Ausführungsformen.

Die Erfindung wird im Folgenden unter Bezugnahme auf die Zeichnungen anhand der bevorzugten Ausführungsformen beschrieben.
- Fig. 1:: zeigt ein erfindungsgemäßes Verfahren und eine erfindungsgemäße Vorrichtung zur Erzeugung und Darstellung eines virtuellen Artikulators für die Zahnheilkunde.
- Fig. 2:: zeigt schematisch wie durch das erfindungsgemäße Verfahren ein unvollständig vorhandener Datensatz eines Patienten zu einem vollständigen Datensatz ergänzt wird.
- Fig. 3:: zeigt eine Interaktion eines Benutzers mit dem virtuellen Artikulator.
- Fig. 4:: zeigt die Ausgaben von einer Diagnose und einer Therapievorschausimulation auf eine Anzeigevorrichtung durch den virtuellen Artikulator.

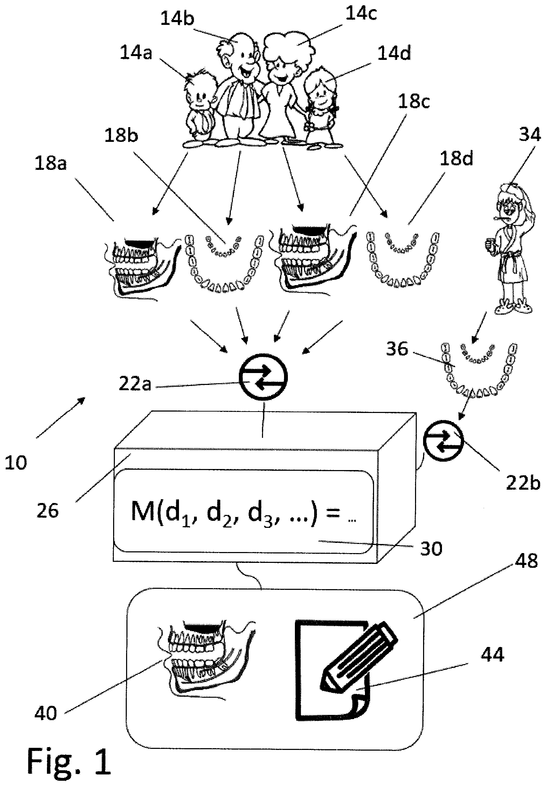

Fig. 1 zeigt das erfindungsgemäße Verfahren 10 zur Erzeugung des virtuellen Artikulators. Hierbei werden von einer Mehrzahl von Menschen 14a, b, c, d körperbezogene Datensätze, insbesondere digitale volumetrisch tomographische (DVT) Datensätze, Jaw-Motion-Tracking (JMT) Datensätze und/oder Datensätze eines anderen geeigneten Messverfahrens, erhoben. Jedem Menschen 14a, b, c, d ist zumindest ein individueller Datensatz 18a, b, c, d zugeordnet, wodurch der verschiedenartigen Anatomie eines jeden Menschen 14a, b, c, d Rechnung getragen wird. Mittels einer Schnittstelle 22a, die beispielsweise als eine Internet-Schnittstelle, eine USB-Schnittstelle und/oder eine andere geeignete Schnittstelle zum Übertragen elektronischer Daten ausgebildet ist, werden die Datensätze 18a, b, c, d eingelesen. Durch die Schnittstelle 22a wird ermöglicht, dass die Datensätze 18 zum Beispiel in verschiedenen Zentren und/oder Kliniken erhoben werden können aber dennoch in einem einzigen rechner- bzw. serverartigen-System 26 zu einem Datenkollektiv zusammenführbar und kombinierbar sind. Insbesondere sind hierbei die Datensätze 18 verschiedener Messverfahren kombinierbar.

Mittels statistischer Methoden wird aus dem Datenkollektiv ein Modell M 30 eines virtuellen Kauapparates generiert, welches die Grundlage für den virtuellen Artikulator darstellt. Hierbei werden sowohl zwischen mehreren Datensätzen 18 eines bestimmten Menschen 14 als auch zwischen Datensätzen von verschiedenen Menschen 14 Korrelationen, Zusammenhänge und Abhängigkeiten ausgewertet. Zweckmäßig umfassen die Datensätze 18 zusätzlich Subgruppen-Kategorien wie das Alter und die Größe der ihnen zugeordneten Menschen 14a, b, c, d und gehen als unabhängige Variablen dᵢ in das Modell 30 ein. In einer ersten Ausführungsausgestaltung wird ein einziges Modell 30 erzeugt, das einen Artikulator repräsentiert, der sich als die wahrscheinlichste Ausgestaltung aus dem Datenkollektiv ergibt. In einer anderen Ausgestaltung werden mehrere Modelle 30 des Artikulators erzeugt, welche beispielsweise die Subgruppen-Kategorien gesondert berücksichtigen, sodass beispielsweise für Patienten unter 16 Jahren und für Patienten über 16 Jahren verschiedene Modell 30 generiert werden. Wird nachstehend nur die erste Ausgestaltung beschrieben, schließt dies dennoch die zweite Ausgestaltung mit ein.

Das erfindungsgemäße Modell M kann beispielsweise auf die folgende Art und Weise erstellt werden:
Die k verschiedenen Eigenschaften jedes Patienten des Kollektivs werden in einem k-multidimensionalen Vektor repräsentiert. Durch die Vielzahl der k-dimensionalen Vektoren wird ein k-dimensionaler Merkmalsraum aufgespannt. Je nach Umfang der Kollektivdaten ist der Merkmalsraum mehr oder weniger dicht besetzt. Nun wird mit einem Machine-Learning-Verfahren, wie dem Deep-Learning, nach Zusammenhängen zwischen den einzelnen k-dimensionalen Datenpunkten im Merkmalsraum gesucht. Das Machine-Learning-Verfahren versucht dazu, den k-dimensionalen Merkmalsraum in einer möglichst kompakten Repräsentation von nur wenigen Parametern zu beschreiben. Hintergrund ist die Erkenntnis, dass häufig nur wenige versteckte Parameter ursächlich für die beobachteten Phänomene beziehungsweise deren Zusammenhänge sind. Das Verfahren kann am besten anhand von zwei Merkmalen im 2-dimensionalen Raum anschaulich gemacht werden. Betrachtet man beispielsweise den Zusammenhang zwischen dem Alter und der maximalen Öffnung der Kiefer, stellen die Punkte in einem 2-dimensionalen Graphen - Alter auf der Abszisse und maximale Kieferöffnung auf der Ordinate - den Merkmalsraum für Alter und maximale Öffnung des Kiefers dar. Alter und maximale Öffnung können beispielsweise angenähert in einem linearen Verhältnis stehen. Durch Interpolation der Datenpunkte mit einer linearen Funktion wird dieser Zusammenhang modellhaft beschrieben. Es wird diejenige lineare Funktion gewählt, die den Fehler des Modells minimiert. Die "Zwischenräume" zwischen den gemessenen Datenpunkten können nun anhand des gefundenen linearen Zusammenhangs interpoliert und extrapoliert werden - es können Datenpunkte geschätzt werden, die nie zuvor gemessen wurden. Dieses Verfahren kann auf beliebige Dimensionen und beliebige Funktionstypen (quadratisch, exponentiell und/oder andere) erweitert werden. Durch geschickte Gewichtung wird der Merkmalsraum auf wenige relevante Datenpunkte reduziert. Dies kann mit einem Ähnlichkeitsmaß erfolgen, das nur solche Datenpunkte des Kollektivs berücksichtigt, die - zumindest betreffend einiger Parameter - ähnlich zu den Parametern des aktuellen Patienten sind. Beispielsweise können die Datenpunkte des Merkmalsraumes berücksichtigt werden, bei denen der Patient ein ähnliches Alter besitzt.

Bevorzugt liegt das Modell M 30 in einem Rechner 26 einer Zahnklinik und/oder einer Zahnarztpraxis vor, sodass das Modell M 30 erfindungsgemäß im täglichen Routinebetrieb nach folgendem Verfahren verwendet werden kann:
Ein Patient 34 hat Zahnschmerzen bzw. Probleme mit seinen Zähnen, sodass er einen Zahnersatz benötigt und aus diesem Grund einen Zahnarzt aufsucht. Um eine Diagnose stellen zu können nimmt der Zahnarzt einen DVT-Datensatz 36, einen JMT-Datensatz 36 und/oder einen optischen Oberflächendatensatz 36 des Patienten 34 auf und lädt diesen DVT-Datensatz 36, JMT-Datensatz 36 und/oder einen optischen Oberflächendatensatz 36 über eine zweite Schnittstelle 22b auf den Rechner 26, wo dieser als weiterer Parameter dᵢ in das Modell 30 eingeht. Das Modell M 30 wird nun dazu verwendet, um den von den Patienten 34 aufgezeichneten Datensatz 36 zu einem individuellen Bewegungsmodell des Kauapparates des Patienten 34 zu ergänzen und dessen Kaubewegung im zeitaufgelösten dreidimensionalen Raum zu simulieren. Der individuelle virtuelle Artikulator 40 des Patienten 34 wird zusammen mit weiteren Ausgabeinformationen 44 auf einem Bildschirm 48 angezeigt und kann durch den Zahnarzt und/oder den Zahntechniker beurteilt und benutzt werden.

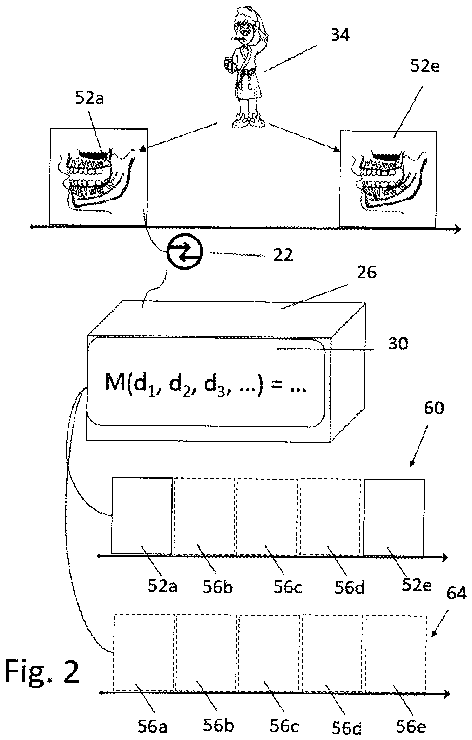

Fig. 2 zeigt erneut den Patienten 34 bei dem ein DVT- und/oder ein JMT-Datensatz 36 generiert wird, wobei der JMT-Datensatz bevorzugt mehrere Bewegungsabschnitte des Patienten 34, wie etwa Öffnungs- und Schließzustand, umfasst. Indem der DVT-Datensatz 36 mit diesem zeitaufgelösten JMT-Datensatz 36 kombiniert wird, kann die Kaubewegung des Patienten 34 in einem DVT-Datensatz 36 dargestellt werden. Im vorliegenden Fall wird angenommen, dass ein vollständiger JMT-Datensatz 36 vorliegt, wenn fünf Bewegungsabschnitte aufgenommen werden. Die Festlegung auf die Anzahl von fünf Bewegungsabschnitten ist willkürlich und dient nur zu Illustrationszwecken, sodass die Anzahl der Bewegungsabschnitte im Prinzip frei wählbar ist. Je höher die Zahl der Bewegungsabschnitte, desto besser ist die zeitliche Auflösung des entsprechenden JMT-Datensatzes 36. Dies bedeutet konkret, dass die Bewegungserfassung mittels des JMT-Systems mit einer höheren Zeitauflösung und deshalb präziser erfolgt. In Fig. 2 wird von dem Patienten 34, aus welchen Gründen auch immer, kein vollständiger JMT-Datensatz 36 aufgezeichnet, sondern lediglich die beiden Bewegungsabschnitte 52a, e, die beispielsweise den Öffnung- bzw. Schließzustand des Kauapparates repräsentieren. Der beim Patienten 34 aufgezeichnete JMT-Datensatz 36 ist also unvollständig, da keine Informationen über die Bewegungen zwischen Öffnungs- und Schließzustand aufgezeichnet sind.

Die aufgezeichneten Daten 36 werden über die Schnittstelle 22 an den Rechner 26 übertragen und gehen in das in dem Rechner 26 abgespeicherte Modell 30 als Input-Variablen ein. Der Rechner 26 erzeugt mithilfe des Modells M 30 entweder einen aufgefüllten DVT- und/oder JMT-Datensatz 60 oder einen vollständig neu erzeugten DVT- und/oder JMT-Datensatz 64. Bei dem aufgefüllten Datensatz 60 werden die vom Patienten aufgezeichneten Bewegungsphasen 52a, e in den aufgefüllten Datensatz 60 übernommen und die fehlenden Bewegungsphasen 56b, c, d durch das Modell M 30 generiert und an die zeitlich korrekte Position innerhalb des aufgefüllten Datensatzes 60 integriert. Alternativ werden in dem vollständig neu erzeugten Datensatz 64 alle fünf Bewegungsabschnitte 56a, b, c, d neu durch das Modell M 30 generiert und an die zeitlich korrekte Position innerhalb des Datensatzes 64 integriert. Die auf diese Weise erzeugten Datensätze 60,64 werden in der Folge, wie in Fig. 1 gezeigt, als virtueller Artikulator 40 auf dem Bildschirm 48 dargestellt und repräsentieren ein individuelles, präzises Bewegungsmodell des Patienten 34.

Der virtuelle Artikulator 40 weist zumindest eine, bevorzugt aber mehrere der folgenden Ausführungsformen auf, die nachstehend näher erläutert werden:
Der virtuelle Artikulator 40 ist in der Lage für den Patienten 34
1) eine vollständige, präzise Simulation der Kaubewegung darzustellen,
2) eine automatische Diagnose vorzunehmen,
3) eine Therapieempfehlung zu erstellen,
4) eine Therapievorschau zu generieren,
5) einen optimalen Zahnersatz zu generieren,
6) eine automatische Therapieplanung zu erstellen,
7) eine optimale restaurative Versorgung zu gewährleisten und
8) fehlende Zähne zu ersetzen.

In dem ersten Ausführungsbeispiel wird durch den virtuellen Artikulator 40 eine vollständige, präzise Kaubewegung des Patienten simuliert, nachdem das Modell M 30 zuvor mit den Daten anderer Patienten bzw. Probanden 14 trainiert wurde. Es werden verschiedene, nicht abschließend aufgezählte, Messmethoden als mögliche Input-Variablen für das Modell M 30 in Betracht gezogen:
- DVT-Datensätze 18
- optische Oberflächendatensätze
- Jaw-Motion-Tracking Datensätze (JMT)
- Subgruppen-Kategorien

Die vollständigen, präzisen und patientenindividuellen Simulationen von Kaubewegungen durch das Modell M 30 können folgende Ergebnisse liefern:
- M(DVT, Oberflächendaten, JMT-Teilmessung) = JMT-Vollmessung
- M(DVT, Oberflächendaten, JMT-Teilmessung, Alter, Geschlecht) = JMT-Vollmessung
- M(Oberflächendaten, DVT) = Protrusionsbewegung unter Zahnkontakt
- M(JMT-Teilmessung) = JMT-Vollmessung
- M(Öffnungsbewegung-JMT) = Protrusionsbewegung
- M(Öffnungsbewegung-JMT, Protrusionsbewegung unter 0° Kieferöffnung) = Protrusionsbewegung unter 10° Kieferöffnung
- M(Oberflächendaten) = Protrusionsbewegung unter Zahnkontakt
- M(Oberflächendaten) = Laterotrusion unter Zahnkontakt
- M(Oberflächendaten, DVT) = Protrusionsbewegung unter Zahnkontakt
- M(Öffnungsbewegung) = Lateralbewegung
- M(Anatomie-DVT, Öffnungsbewegung-JMT) = Lateralbewegung
- M(Kaubewegung) = Öffnungsbewegung
- M(Kaubewegung) = JMT-Vollmessung
- M(Öffnungsbewegung-JMT) = Laterotrusionsbewegung
- M(Öffnungsbewegung-JMT) = Protrusionsbewegung
- M(Anatomie-3D-Bildgebung) = Öffnungsbewegung
- M(Oberflächendaten) = Protrision unter Zahnkontakt
- M(Oberflächendaten) = Laterotrusion unter Zahnkontakt

Ein an dem Patienten 34 aufgezeichneter JMT-Datensatz 36, wobei dies auch für die anderen Datensätze gilt, kann niemals alle Bewegungen repräsentieren, die der Patient 34 zu vollziehen in der Lage ist. Wie vorstehend gezeigt, ergänzt das Modell M 30 die unvollständigen Datensätze bzw. eine Kombination von Datensätzen zu verschiedenen, simulierten patientenindividuellen Bewegungen über den gesamten möglichen Bewegungsspielraum des Kauapparates.

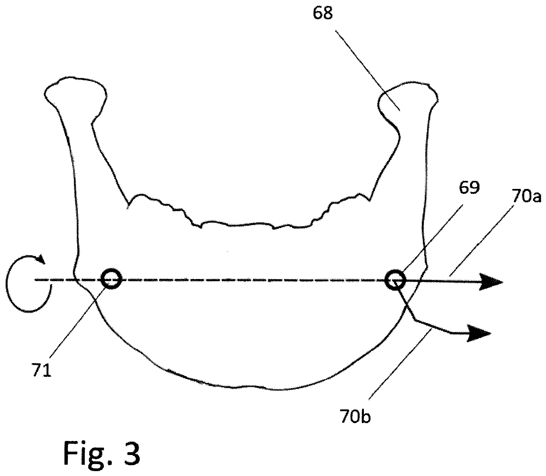

Das chronologische Abspielen der zuvor aufgenommenen einzelnen Bewegungsphasen wird als zeitliche Artikulation bezeichnet. Alternativ kann beispielsweise der Unterkiefer 68 mit Hilfe des virtuellen Artikulators 40 direkt in seiner Lage im Raum manipuliert werden. Dies kommt der geführten Manipulation des Unterkiefers des Patienten durch den Behandler gleich. Dies wird als örtliche Artikulation bezeichnet und ist in Fig. 3 dargestellt:
In dem schematisch dargestellten Unterkiefer 68 in Fig. 3 wird ein erster Punkt 69 markiert und kann je nach Wunsch des Benutzers, der den virtuellen Artikulator 40 bedient, auf dem Bildschirm 48 entlang verschiedener Bewegungspfade 70a, b verschoben werden. Der Unterkiefer 48 folgt hierbei modellgerecht nur zu den Punkten, die der Unterkiefer 48 des Patienten 34 real einnehmen kann. Wird zusätzlich ein zweiter Punkt 71 festgelegt, so folgt, dass als einzig verbleibender Freiheitsgrad die Rotation um die durch die Punkte 69, 71 gebildete Achse übrig bleibt. Der virtuelle Artikulator 40 vollzieht diejenige Bewegung, die der rotierenden Bewegung um die Achse am nächsten kommt beziehungsweise die mit hoher Wahrscheinlichkeit folgt oder eingenommen werden kann. Auf dem Bildschirm 48 wird eine Wahrscheinlichkeitswolke angezeigt, die angibt mit welcher Wahrscheinlichkeit der Patient die Position tatsächlich einnehmen kann.

Bevorzugt wird die Position und die Lage des Unterkiefers 48 nicht nur durch die aktuelle Position des Punktes 69, sondern auch - aus Gründen der Hysterese - durch die zuvor unmittelbar eingenommene Position des Unterkiefers 68 bestimmt.

In dem zweiten Ausführungsbeispiel werden am Patienten 34 Bewegungen, JMT-Datensätze, DVT-Datensätze und/oder optische Oberflächendaten der Zähne aufgenommen und als Input-Variablen verwendet. Das erfindungsgemäße Verfahren enthält Daten anderer Patienten sowie Angaben von Befunden bzw. Krankheiten der anderen Patienten, die beispielsweise von einem Zahnarzt erstellt und eingegeben wurden und ganz bestimmten Datensätzen zugeordnet sind. Durch Erkennen von Mustern, Korrelationen und Gesetzmäßigkeiten ist das Modell M 30 in der Lage anhand der Daten 36 des Patienten 34 zu entscheiden, ob wirklich einer Erkrankung vorliegt und/oder Teile der Bewegung des Kauapparates des Patienten 34 pathologisch sind.

Durch den virtuellen Artikulator 40 bzw. das erfindungsgemäße mathematische Modell M 30 können automatisch Diagnosen bzw. Befunde für den Patienten 34 gestellt werden. Die Wahrscheinlichkeit einer bestimmten Diagnose wird mit einer Prozentzahl angegeben. Es können automatisch bestimmte Teile der am Patienten aufgezeichneten Kaubewegung oder Abschnitte hiervon als krank identifiziert werden. Es folgt eine nicht abschließende Auflistung möglicher Befunde/Diagnosen:
- M(JMT-Daten) = eingeschränkte Koordination; 60 % Wahrscheinlichkeit
- M(JMT-Daten) = eingeschränkte Bewegungskapazität; 60 % Wahrscheinlichkeit
- M(JMT-Daten) = asymmetrische Öffnungsbewegung; 80 % Wahrscheinlichkeit
- M(DVT-Daten) = Arthrose im linken Kiefergelenk; 70 % Wahrscheinlichkeit
- M(DVT-Daten, JMT-Daten) = Arthrose im linken Kiefergelenk; 85 % Wahrscheinlichkeit
- M(JMT-Daten, Geschlecht) = Craniomandibuläre Dysfunktion (CMD); 70 % Wahrscheinlichkeit
- M(JMT-Daten, Geschlecht, Alter) = CMD; 82 % Wahrscheinlichkeit
- M(JMT-Daten) = CMD; 75 % Wahrscheinlichkeit
- M(JMT-Daten) = Springender Diskus links; 80 % Wahrscheinlichkeit
- M(JMT-Daten, DVT-Daten) = Springender Diskus links; 95 % Wahrscheinlichkeit
- M(Oberflächendaten) = Bruxismus; 65 % Wahrscheinlichkeit
- M(JMT-Daten, DVT-Daten, Oberflächendaten) = Springender Diskus; 75 % Wahrscheinlichkeit

Zweckmäßigerweise können die Befunde zudem örtlich bzw. zeitlich eingeschränkt werden. Der virtuelle Artikulator 40 bzw. das Modell M 30 kann angeben, an welchen Stellen bzw. in welcher Bewegungsphase der DVT-Daten und/oder der JMT-Daten ein Befund erkannt wurde:
- M(JMT-Daten) = Abspringender Diskus links; 80 % Wahrscheinlichkeit; Öffnungsbewegung bei Sekunde 3 und Schließbewegung bei Sekunde 15
- M(DVT-Daten) = Zurückspringender Diskus links; 70 % Wahrscheinlichkeit; Öffnungsbewegung bei Sekunde 7 und Schließbewegung bei Sekunde 16

Bevorzugt werden bestimmte Bewegungsabschnitte mit Kennzeichnungsmerkmalen und anderen Zusatzinformationen versehen, sodass beispielsweise innerhalb eines JMT-Datensatzes zwischen einer Kieferöffnung und einer Kieferschließung logisch unterschieden werden kann, indem den verschiedenen Zuständen die entsprechenden Kennzeichnungsmerkmale zugeordnet werden. Durch das Lernen dieser Kennzeichnungsmerkmale ist das Modell M 30 in der Lage auch bei dem Patienten 34 Öffnungs- und Schließbewegungsanteile zu identifizieren und zu unterscheiden, ohne dass ein Zahnarzt diese Unterscheidungen explizit vornehmen muss.

In der dritten Ausführungsform wird durch den virtuellen Artikulator 40 eine Therapieempfehlung generiert. Das Datenkollektiv des Modells M 30 weist hierbei Informationen über erfolgreiche bzw. fehlgeschlagene Behandlungen an den Patienten auf, die das Datenkollektiv ausbilden. Anhand dieser Zusatzinformation kann das Modell M 30 automatisch Therapieempfehlungen auf Basis von zuvor erfolgreich durchgeführten Behandlungen generieren. Für jede Therapieempfehlung werden ein Wahrscheinlichkeits- und ein Signifikanzwert angegeben mit denen eine Heilung des Patienten 34 statistisch beurteilbar ist, sodass der Heilungserfolg abgeschätzt werden kann:
- M(JMT-Daten) = Michiganschiene im Oberkiefer mit "Freedom in Centric" von 2 mm verspricht den größten Heilungserfolg
- M(DVT-Daten) = Michiganschiene "Flat Plane" mit 3 mm Sperrung an den Inzisoren verspricht den größten Heilungserfolg
- M(JMT-Daten, DVT) = Michiganschiene mit 6 mm Sperrung zur gezielten Entlastung/Dekompression der Kondylen verspricht den größten Heilungserfolg

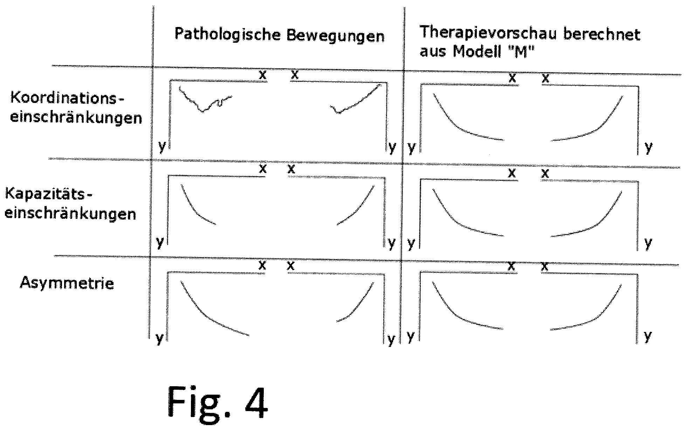

In der vierten Ausführungsform wird durch den virtuellen Artikulator 40 eine Therapievorschausimulation generiert und angezeigt. Es wird gezeigt, wie sich die aktuellen Bewegungen des Kauapparates des Patienten 34 in Bezug auf eine Therapiesimulation mit bestimmten Therapiemethoden verhalten. Beispielsweise kann eine eingeschränkte Beweglichkeit der Kiefergelenke anhand des Modells M 30 so umgerechnet werden als hätte der Patient 34 die Therapie bereits durchlaufen. Dies ist möglich, da das Modell M 30 den Zusammenhang zwischen einem erkrankten und einem gesunden Zustand anhand der in das Modell M 30 eingegebenen Datenkollektivsätze "gelernt" hat. Das Modell M 30 errechnet wie "kranke" Bewegungen durch die Therapie in "gesunde" Bewegungen umgewandelt werden und stellt diese auf dem Bildschirm 48 da. Eine mögliche Darstellungsübersicht ist in Fig. 4 gezeigt. Die sechs Freiheitsgrade der gemessenen Bewegungen werden dabei anhand der Bewegungsbahnen charakteristischer Punkte in den Kiefergelenken und/oder den Zähnen visualisiert. Abhängig von der Pathologie treten unterschiedliche Muster auf. So sind die Bewegungsbahnen bei einer Koordinationseinschränkung des Patienten meist rau und zittrig. Bei Kapazitätseinschränkungen sind die Bahnen verkürzt, da der Patient den Mund nicht mehr komplett öffnen kann. Bei einer asymmetrischen Pathologie ist die Bahn des einen Kiefergelenkes länger als die des anderen Kiefergelenkes. Die linke Spalte in Fig. 4 zeigt pathologische Bewegungen, die am Patienten 34 gemessen wurden.

Die rechte Spalte zeigt die Bewegungen, die anhand des Datenkollektivs aus den pathologischen Bewegungen für den Patienten 34 unter der Anwendung einer entsprechenden Therapie berechnet werden:
- M(JMT-Daten mit eingeschränkter Mundöffnung) = JMT-Daten mit voller Mundöffnung
- M(JMT-Daten mit Koordinationseinschränkungen) = JMT-Daten ohne Koordinationseinschränkungen
- M(JMT-Daten mit asymmetrischer Mundöffnung) = JMT-Daten mit symmetrischer Mundöffnung
- M(JMT-Daten mit eingeschränkter Mundöffnung, DVT-Daten) = JMT-Daten mit voller Mundöffnung
- M(JMT-Daten mit Springen des Diskus) = JMT-Daten ohne Springen des Diskus

Durch die Therapievorschausimulation wird ermöglicht, dem Patienten 34 eine zu seinen Kiefergelenken optimal passende Schiene zu fertigen - selbst wenn am Patienten 34 noch keine Bewegungsabläufe gemessen wurden. Restaurationen und/oder funktionelle kieferorthopädische Behandlungen können also frühzeitig geplant werden, da die anzustrebende, individuelle Kaubewegung des Patienten 34 bekannt ist.

In der fünften Ausführungsform wird mithilfe des erfindungsgemäßen Modells M 30 ein automatisches Design von effektiven und präzisen Therapiebehelfen ermöglicht. So können beispielsweise präzise Aufbissbehelfe, wie etwa Therapieschienen, Tabletops oder Provisorien gefertigt werden, die über funktionelle Kaufflächen und störungsfreie okklusale Reliefs verfügen. Hierdurch wird manuelles Einschleifen im Mund des Patienten 34 minimiert und eine bessere Passung garantiert:
- M(JMT-Daten, DVT-Daten, optische Oberflächendaten) = Geometrie eine Therapiesch iene

In der sechsten Ausführungsform wird mittels des virtuellen Artikulators 40 bzw. des Modells M 30 eine automatische Therapieplanung bezüglich der optimalen kieferorthopädische Aufstellung der vorhandenen Zähne erzeugt:
- M(JMT-Daten, Oberflächendaten) = optimale kieferorthopädische Zielposition der Zähne für die gegebenen Bewegungsdaten
- M(JMT-Daten, DVT-Daten, Oberflächendaten) = optimale Aufstellung der Zähne für die gegebenen Bewegungsdaten unter Berücksichtigung der Wurzeln der Zähne
- M(JMT-Daten, DVT-Daten, optische Oberflächendaten) = Geometrie eines Therapiesch ienen-Sets
In der siebten Ausführungsform wird mittels des virtuellen Artikulators 40 eine optimale restaurative Versorgung bereitgestellt:
- M(JMT-Daten, Oberflächendaten) = Optimale Restauration

In der achten Ausführungsform wird mittels des Modells M 30 beim Ersetzen von fehlenden Zähnen eine präzise Form für die einzusetzende Krone berechnet:
- M(JMT-Daten, Oberflächendaten linke Kieferseite) = Oberflächendaten rechte Kieferseite
- M(JMT-Daten, Oberflächendaten mit fehlendem Zahn 23, DVT-Daten) = individuelle dynamische Krone, die zu den Bewegungsdaten passt mit automatisch geplantem Implantat im Knochen

## Patentansprüche

1. Verfahren zur Erstellung eines rechnergestützten virtuellen Artikulators (40) für die Zahnheilkunde, umfassend
körperbezogene Daten (18), die von einer Mehrzahl von Menschen (14) aufgezeichnet und zu einem Datenkollektiv zusammengefasst werden,
ein Modell (30) eines Kauapparates, das aus dem Datenkollektiv mittels statistischer Methoden generiert wird,
**dadurch gekennzeichnet, dass** das Modell (30) verwendet wird, um von einem einzelnen Patienten (34) aufgezeichnete körperbezogene Daten (36) zu einem individuellen Bewegungsmodell des Kauapparates des Patienten (34) zu ergänzen und eine Bewegung des Kauapparates zu simulieren,
wobei aufgenommene Bewegungsphasen des einzelnen Patienten (34) durch hiervon verschiedene Bewegungsphasen von anderen Patienten zu einem vollständigen Satz von Bewegungsphasen ergänzt werden.

2. Verfahren nach dem vorherigen Anspruch, **dadurch gekennzeichnet, dass** die körperbezogenen Daten (36) des Patienten (34) über eine Schnittelle (22b) übertragen und zum Datenkollektiv hinzugefügt werden.

3. Verfahren nach einem der vorherigen Ansprüche, **dadurch gekennzeichnet, dass** die körperbezogenen Daten (18) Daten aus bildgebenden Verfahren und/oder Daten aus der Anamnese und/oder Bewegungsdaten umfassen.

4. Verfahren nach Anspruch 3, **dadurch gekennzeichnet, dass** die Anamnese Daten über das Geschlecht und/oder die Größe und/oder das Alter und/oder die Herkunft und/oder den BMI und/oder Vorerkrankungen und/oder Befunde und/oder andere behandlungsrelevante Kennzeichen des Patienten (34) aufweist.

5. Verfahren nach einem der Ansprüche 3 bis 4, **dadurch gekennzeichnet, dass** aus den Anamnese Daten verschiedene Patientenpopulationen für das Modell (30) gebildet werden, und dass der Patient (34) zumindest einer dieser Patientenpopulationen zugeordnet wird.

6. Verfahren nach Anspruch 5, **dadurch gekennzeichnet, dass** für jede der Patientenpopulationen ein eigenes Modell (30) des Kauapparates generiert wird.

7. Verfahren nach einem der Ansprüche 3 bis 6, **dadurch gekennzeichnet, dass** die bildgebenden Verfahren eine digitale volumetrische tomographische Datenaufnahme (DTV) und/oder eine Datenaufnahme mittels eines Jaw Motion Tracking (JMT) Systems und/oder anderer geeignete Messverfahren zur Beschreibung der Anatomie des Kauapparates umfassen.

8. Verfahren nach Anspruch 7, **dadurch gekennzeichnet, dass** die bildgebenden Daten von verschiedenen Messverfahren in ein gemeinsames Bezugssystem eingebracht werden.

9. Verfahren nach einem der Ansprüche 3 bis 8, **dadurch gekennzeichnet, dass** die körperbezogenen Daten Oberflächendaten der Zähne und/oder Beißkräfte des Kauapparates umfassen.

10. Verfahren nach Anspruch 9, **dadurch gekennzeichnet, dass** die Beißkräfte aufgrund des zeitlichen Verlaufs der Okklusion der Zähne bestimmt werden, der durch die bildgebenden Verfahren und/oder Bewegungsdaten aufgenommen wird.

11. Verfahren nach einem der Ansprüche 3 bis 10, **dadurch gekennzeichnet, dass** die durch die bildgebenden Verfahren aufgezeichneten Daten Aufnahmen mehrerer Bewegungsphasen (52) des Kauapparates und/oder Aufnahmen zu verschiedenen Zeitpunkten umfassen, und dass die Bewegungsphasen mit therapierelevanten Information gekennzeichnet sind.

12. Verfahren nach einem der vorherigen Ansprüche, **dadurch gekennzeichnet, dass** der virtuelle Artikulator (40) das simulierte, individuelle Bewegungsmodell des Patienten auf einer Anzeigevorrichtung (48) darstellt und/oder weitere Ausgabeinformationen (48) und/oder eine Therapievorschausimulation bereitstellt.

13. Verfahren nach einem der Anspruch 12, **dadurch gekennzeichnet, dass** der virtuelle Artikulator (40) auf der Anzeigevorrichtung (48) angibt, ob die von dem Patienten (34) aufgezeichneten körperbezogene Daten (36) zur Erstellung des simulierten Bewegungsmodells hinreichend sind und welche Messungen gegebenenfalls noch auszuführen sind.

14. Verfahren nach einem der Ansprüche 12 bis 13, **dadurch gekennzeichnet, dass** vermittels des Artikulators (40) die Bewegung (70) ausgewählter markanter Punkte (69) des Kauapparates (68) auf der Anzeigevorrichtung (48) dargestellt wird.

15. Verfahren nach einem der Ansprüche 12 bis 14, **dadurch gekennzeichnet, dass** bei der Darstellung des Bewegungsmodells auf der Anzeigevorrichtung (44) anatomische Punkte (69; 71) des Kauapparates bezüglich einer Translations- und/oder einer Rotationsbewegung fixiert werden und der virtuelle Artikulator (40) automatisch die hieraus resultierenden Freiheitsgrade des Modells berechnet und angibt.

16. Verfahren nach einem der Ansprüche 12 bis 15, **dadurch gekennzeichnet, dass** die weiteren Ausgabeinformationen (44) angeben mit welcher Wahrscheinlichkeit der Patient (34) einer Patientenpopulation zuzuordnen ist

17. Verfahren nach einem der vorherigen Ansprüche, **dadurch gekennzeichnet, dass** das simulierte Bewegungsmodell des Kauapparates des Patienten (34) als digitaler volumetrisch tomographischer Datensatz mit Oberflächendaten von zumindest einem Teil der Zähne des Patienten (34) ausgegeben wird.

18. Verfahren nach einem der vorherigen Ansprüche, **dadurch gekennzeichnet, dass** das Modell (30) Methoden der Finiten Elemente verwendet.

19. Verfahren nach einem der vorherigen Ansprüche, **dadurch gekennzeichnet, dass** der virtuelle Artikulator (40) externen Benutzern über ein Interface zur Verfügung gestellt wird, um das Bewegungsmodell des Kauapparates des Patienten (34) zu simulieren, wobei das Datenkollektiv unter Verschluss gehalten wird und für externe Benutzer unzugänglich bleibt.

20. Vorrichtung zur Durchführung des Verfahrens nach einem der vorhergehenden Ansprüche, umfassend
ein Gerät zur Aufnahme eines bildgebenden Datensatzes (18; 36) des Kauapparates von Patienten (34),
eine Schnittstelle (22) zur Übertragung des bildgebenden Datensatzes (18; 36) an einen Rechner (36),
eine Prozessoreinheit des Rechners (36) zur Erstellung eines virtuellen Artikulators (40) und
eine Anzeigevorrichtung (48) zur Darstellung des virtuellen Artikulators (40).

## Claims

1. A method for producing a computer-aided virtual articulator (40) for dentistry, comprising:
recording and collating body-related data (18) from a plurality of persons (14) to form a data collection;
generating a model (30) of a masticatory apparatus from the data collection by means of statistical methods;
**characterized in that** the model (30) is used to supplement body-related data (36) recorded from a single patient (34) to provide an individual movement model of the masticatory apparatus of the patient (34) and to simulate a movement of the masticatory apparatus,
wherein recorded movement phases from single patients (34) are supplemented by means of movement phases from other patients which differ therefrom in order to form a complete set of movement phases.

2. The method as claimed in the preceding claim, **characterized in that** the body-related data (36) for the patient (34) is transmitted via an interface (22b) and added to the data collection.

3. The method as claimed in one of the preceding claims, **characterized in that** the body-related data (18) comprise data from an imaging method and/or data from anamnesis and/or movement data.

4. The method as claimed in claim 3, **characterized in that** the anamnesis comprises data regarding gender and/or height and/or age and/or origin and/or BMI and/or pre-existing conditions and/or findings and/or other characteristics of the patient (34) which are relevant to the treatment.

5. The method as claimed in claim 3 or claim 4, **characterized in that** the data from the anamnesis are used to form different patient populations for the model (30), and **in that** the patient (34) is allocated to at least one of these patient populations.

6. The method as claimed in claim 5, **characterized in that** a distinct model (30) of the masticatory apparatus is generated for each of the patient populations.

7. The method as claimed in one of claims 3 to 6, **characterized in that** the imaging method comprises a digital volumetric tomographic data recording (DTV) and/or a data recording by means of a jaw motion tracking (JMT) system and/or another measuring method which is suitable for describing the anatomy of the masticatory apparatus.

8. The method as claimed in claim 7, **characterized in that** the imaging data are introduced into a common reference system from various measuring methods.

9. The method as claimed in one of claims 3 to 8, **characterized in that** the body-related data comprises surface data for the teeth and/or bite forces of the masticatory apparatus.

10. The method as claimed in claim 9, **characterized in that** the bite forces are determined on the basis of a temporal profile for the occlusion of the teeth which is recorded by the imaging method and/or movement data.

11. The method as claimed in one of claims 3 to 10, **characterized in that** the data recorded by the imaging method comprise recordings of a plurality of movement phases (52) of the masticatory apparatus and/or recordings at different points in time, and **in that** the movement phases are labelled with information which is relevant to therapy.

12. The method as claimed in one of the preceding claims, **characterized in that** the virtual articulator (40) displays the simulated individual movement model of the patient on a display means (48) and/or provides further output information (48) and/or a therapy preview simulation.

13. The method as claimed in claim 12, **characterized in that** the virtual articulator (40) indicates on the display device (48) whether the body-related data (36) recorded from the patient (34) are sufficient to produce the simulated movement model and which measurements, if any, still have to be carried out.

14. The method as claimed in claim 12 or claim 13, **characterized in that** the movement (70) of selected distinctive points (69) of the masticatory apparatus (68) is displayed on the display device (48) by means of the articulator (40).

15. The method as claimed in one of claims 12 to 14, **characterized in that** when the movement model is displayed on the display device (44), anatomical points (69; 71) of the masticatory apparatus are fixed with respect to a translational movement and/or a rotational movement, and the virtual articulator (40) automatically calculates and provides the degrees of freedom of the model resulting therefrom.

16. The method as claimed in one of claims 12 to 15, **characterized in that** the further output information (44) indicates the probability with which the patient (34) should be assigned to a patient population.

17. The method as claimed in one of the preceding claims, **characterized in that** the simulated movement model of the masticatory apparatus of the patient (34) is output as a digital volumetric tomographic data set with surface data from at least a portion of the teeth of the patient (34).

18. The method as claimed in one of the preceding claims, **characterized in that** the model (30) uses finite element methods.

19. The method as claimed in one of the preceding claims, **characterized in that**
the virtual articulator (40) is made available to external users via an interface so as to simulate the movement model of the masticatory apparatus of the patient (34), wherein the data collection is kept confidential and is inaccessible to external users.

20. A device for carrying out the method as claimed in one of the preceding claims, comprising:
an apparatus for recording an imaging data set (18; 36) of the masticatory apparatus of patients (34),
an interface (22) for transmitting the imaging data set (18; 36) to a computer (36),
a processor unit of the computer (36) for producing a virtual articulator (40), and
a display device (48) for displaying the virtual articulator (40).

## Revendications

1. Procédé de création d'un articulateur virtuel à assistance informatique (40) pour la dentisterie, comprenant
des données relatives au corps (18) qui sont enregistrées par une pluralité de personnes (14) et sont regroupées en un collectif de données,
un modèle (30) d'appareil masticatoire qui est généré à partir du collectif de données au moyen de procédés statistiques,
**caractérisé en ce que** le modèle (30) est utilisé pour compléter des données relatives au corps (36) enregistrées par un patient individuel (34) en un modèle individuel de mouvement de l'appareil masticatoire du patient (34) et pour simuler un mouvement de l'appareil masticatoire,
les phases de mouvements enregistrées des patients individuels (34) étant complétées par des phases de mouvement différentes de celles-ci d'autres patients pour obtenir un jeu complet de phases de mouvement.

2. Procédé selon la revendication précédente, **caractérisé en ce que** les données relatives au corps (36) du patient (34) sont transférées par une interface (22b) et ajoutées au collectif de données

3. Procédé selon la revendication précédente, **caractérisé en ce que** les données relatives au corps (18) comprennent des données de procédés d'imagerie et/ou des données issues de l'anamnèse et/ou des données de mouvement.

4. Procédé selon la revendication 3, **caractérisé en ce que** l'anamnèse présente des données concernant le sexe et/ou la taille et/ou l'âge et/ou l'origine et/ou l'IMC et/ou les maladies antérieures et/ou des analyses et/ou d'autres caractéristiques relatives au traitement du patient (34).

5. Procédé selon une des revendications 3 à 4, **caractérisé en ce que**, à partir des données d'anamnèse, différentes populations de patients sont constituées pour le modèle (30), et que le patient (34) est affecté à au moins une de ces populations de patients.

6. Procédé selon la revendication 5, **caractérisé en ce que**, pour chacune des populations de patients, un modèle propre (30) d'appareil masticatoire est généré.

7. Procédé selon une des revendications 3 à 6, **caractérisé en ce que** les procédés d'imagerie comprennent un enregistrement de données tomographique volumétrique (DTV) et/ou un enregistrement de données au moyen d'un système de suivi de mouvement de mâchoire (Jaw Motion Tracking, JMT) et/d'autres procédés de mesures appropriés pour la description de l'anatomie de l'appareil masticatoire.

8. Procédé selon la revendication 7, **caractérisé en ce que** les données d'imagerie sont intégrées par différents procédés de mesure dans un système de référence commun.

9. Procédé selon une des revendications 3 à 8, **caractérisé en ce que** les données relatives au corps comprennent des données de surface des dents et/ou des forces de morsure de l'appareil masticatoire.

10. Procédé selon la revendication 9, **caractérisé en ce que** les forces de morsure sont définies à partir de l'évolution temporelle de l'occlusion des dents qui est enregistrée grâce au procédé d'imagerie et/ou à des données de mouvement

11. Procédé selon une des revendications 3 à 10, **caractérisé en ce que** les données enregistrées par les procédés d'imagerie comprennent des clichés de plusieurs phases de mouvement (52) de l'appareil masticatoire et/ou des clichés pris à différents moments, et que les phases de mouvement sont **caractérisées par** des informations relatives à la thérapie.

12. Procédé selon une des revendications précédentes, **caractérisé en ce que** l'articulateur virtuel (40) représente le modèle de mouvement individuel simulé du patient sur un dispositif d'affichage (48) et/ou met à disposition d'autres informations d'édition (48) et/ou une simulation d'aperçu de thérapie.

13. Procédé selon la revendication 12, **caractérisé en ce que** l'articulateur virtuel (40) indique sur le dispositif d'affichage (48) si les données relatives au corps (36) enregistrées par le patient (34) sont suffisantes pour créer le modèle de mouvement simulé et quelles mesures doivent encore être effectuées le cas échéant.

14. Procédé selon une des revendications 12 à 13, **caractérisé en ce que**, au moyen de l'articulateur (40), le mouvement (70) de points marquants sélectionnés (69) de l'appareil masticatoire (68) est représenté sur le dispositif d'affichage (48).

15. Procédé selon une des revendications 12 à 14, **caractérisé en ce que**, lors de la représentation du modèle de mouvement sur le dispositif d'affichage (44), des points anatomiques (69 ; 71) de l'appareil masticatoire sont fixés en ce qui concerne un mouvement de translation et/ou de rotation et que l'articulateur virtuel (40) calcule et indique automatiquement le degré de liberté en résultant du modèle.

16. Procédé selon une des revendications 12 à 15, **caractérisé en ce que** les autres informations d'édition (44) indiquent avec lequel probabilité le patient (34) doit être affecté à une population de patients.

17. Procédé selon une des revendications précédentes, **caractérisé en ce que** le modèle de mouvement simulé de l'appareil masticatoire du patient (34) est édité sous forme d'un jeu de données tomographique volumétrique numérique avec des données de surface d'au moins une partie des dents du patient (34).

18. Procédé selon une des revendications précédentes, **caractérisé en ce que** le modèle (30) utilise des procédés d'éléments finis.

19. Procédé selon une des revendications précédentes, **caractérisé en ce que** l'articulateur virtuel (40) est mis à disposition d'utilisateurs externes par l'intermédiaire d'une interface pour simuler le modèle de mouvement de l'appareil masticatoire du patient (34), le collectif de données étant gardé secret et restant inaccessible aux utilisateurs externes.

20. Dispositif de réalisation du procédé selon une des revendications précédentes, comprenant
un appareil d'enregistrement d'un jeu de données d'imagerie (18 ; 36) de l'appareil masticatoire de patients (34),
une interface (22) pour transférer le jeu de données d'imagerie (18 ; 36) à un ordinateur (36),
une unité de processeur de l'ordinateur (36) pour créer un articulateur virtuel (40) et
un dispositif d'affichage (48) pour représenter l'articulateur virtuel (40).
